# EUROPÄISCHE PATENTSCHRIFT

(11) **EP 0 457 094 B1**
(45) Veröffentlichungstag und Bekanntmachung des Hinweises auf die Patenterteilung: **20.07.1994**
(21) Anmeldenummer: 91106986.2
(22) Anmeldetag: 30.04.1991
(51) Int. Cl.: B01F 3/04

(54) **Vorrichtung zum Anschluss einer flachen innerhalb eines Tanks angeordneten Belüfterplatte**
Device for connecting a flat ventilation plate inside a container
Dispositif pour connecter une plaque de ventilation plane à l'intérieur d'un réservoir

(30) Priorität: 12.05.1990 DE 9005422 U
(43) Veröffentlichungstag der Anmeldung: 21.11.1991
(73) Patentinhaber: Egner, Siegfried, D-74740 Adelsheim (DE)
(72) Erfinder: Egner, Siegfried, D-74740 Adelsheim (DE)
(74) Vertreter: Clemens, Gerhard, Dr.-Ing.

(56) Entgegenhaltungen:
- DE-U- 9 005 422
- GB-A- 824 376
- GB-A- 2 073 602

## Beschreibung

Die Erfindung betrifft eine Vorrichtung zum Anschluß einer flachen, mit einer in der Flächenmitte ihrer Unterseite angeordneten, mit Innengewinde versehenen Muffe ausgestatteten, innerhalb eines Tanks angeordneten Belüfterplatte an der Bodenplatte des Tanks.

Solche Belüfterplatten haben im allgemeinen die Form eines langgestreckten Rechtecks und weisen auf ihrer Oberseite eine Vielzahl von Löchern oder Düsen auf, aus denen zur Belüftung von Flüssigkeiten Gas, beispielsweise Luft, perlt. Die Belüfterplatten werden zu diesem Zweck mit der mit den Düsen ausgestatteten Oberseite nach oben weisend an stabilen, verlegten, vierkantigen Belüfterrohren angeschlossen und auch befestigt. Zum Anschluß und zur Befestigung dient die Muffe.

Bei einer bekannten Belüftungsanlage ist in der nach oben weisenden Anschlußwand des Belüfterrohrs für jede Belüfterplatte ein mit Außengewinde versehener Nippel vorgesehen, auf den die betreffende Belüfterplatte mit ihrer Muffe geschraubt wird. Dazu muß die Belüfterplatte um die Achse der Muffe gedreht werden. Das hat zur Folge, daß man für jede Belüfterplatte genügend Platz nach beiden Seiten freihalten muß, damit die Drehbewegung durchgeführt werden kann. Das wiederum behindert eine unter Umständen wünschenswerte enge Anordnung der Belüfterplatten.

Im Inneren eines Tanks ist die Notwendigkeit, die Belüfterplatte bei der Montage zu schwenken, zusätzlich besonders hinderlich wegen der den Schwenkbereich einschränkenden Tankwände und weiterer möglicher Tankeinbauten.

Aufgabe der Erfindung ist es, eine Vorrichtung der eingangs genannten Art so auszugestalten, daß sich die Belüfterplatten auch sehr eng nebeneinander und eng neben den Seitenwänden und anderen Einbauten innerhalb eines Tanks anordnen lassen.

Die Erfindung ist dadurch gekennzeichnet, daß ein rohrförmiges Zwischenstück vorgesehen ist, das in der Längsmitte einen ringförmigen Vorsprung und beidseitig zur Längsachse senkrechte Schultern aufweist, daß das eine Ende des Zwischenstücks ein in das Innengewinde der Muffe passendes erstes Außengewinde aufweist, daß das andere Ende des Zwischenstücks ein zweites Außengewinde aufweist und durch ein in der Bodenplatte vorgesehenes, glattes Anschlußloch mit Überstand paßt, daß der Überstand eine Anschlußmuffe, vorzugsweise einen Schlauchnippel, aufweist und daß eine Mutter vorgesehen ist, die die Bodenplatte gegen den Vorsprung verspannend auf den Überstand aufschraubbar ist.

Die Erfindung ist bevorzugt anwendbar bei der Anordnung der Belüfterplatten innerhalb eines Tanks, sie ist auf diese Anwendung aber nicht beschränkt.

Nach der Erfindung kann während der Montage die Belüfterplatte in ihrer späteren Schwenkstellung verbleiben, benötigt also für die Montage keinen freien Schwenkraum. Das wiederum macht es möglich, daß die Belüfterplatten ohne zusätzlichen Schwenkbedarf auch in bedrängten Platzverhältnissen angeordnet werden können.

Die Erfindung ist auch einfach zu verwirklichen. Sie erfordert im Tankboden keinen Gewindenippel, es genügt ein einfaches, glattes Anschlußloch. Es wird nur das Zwischenstück zusätzlich benötigt, ein Kleinteil, dessen Zusatzaufwand allein schon durch die mit der Erfindung erzielbare Erleichterung der Montage gerechtfertigt ist, ganz abgesehen von der Erweiterung der Anordnungsmöglichkeiten.

Die angestrebte Dichtung wird dadurch begünstigt, daß ein Dichtungsring vorgesehen ist, der auf das andere Ende des Zwischenstücks gesteckt und zwischen dem Vorsprung des Zwischenstücks und der Bodenplatte angeordnet ist.

Die Montage wird weiter erleichtert, wenn der Vorsprung des Zwischenstücks außen als Sechskant ausgebildet ist.

Die Erfindung ist vorteilhaft anwendbar bei einer Belüftereinrichtung mit mehreren Belüfterplatten, die mit Vorrichtungen nach der Erfindung in einem gemeinsamen Tank aufgereiht angeordnet sind. In einem solchen Fall kann eine Belüfterplatte innerhalb des Schwenkbereichs einer benachbarten Belüfterplatte angeordnet sein, wobei der Schwenkbereich definiert ist durch den größten Kreis, den die betreffende Belüfterplatte beim Drehen um die Achse ihrer Muffe beschreibt. Die Anwendung der Erfindung ist aber nicht auf solche Belüftereinrichtungen beschränkt.

Die Erfindung wird nun anhand der beigefügten Figuren näher erläutert:

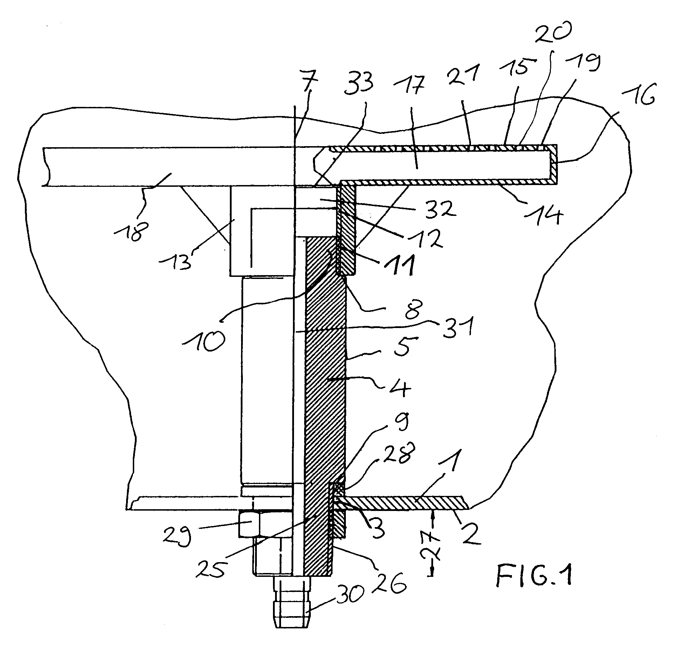

- Figur 1: im Teilquerschnitt eine Belüfterplatte, die innerhalb eines Tanks an den Tankboden angeschlossen ist,

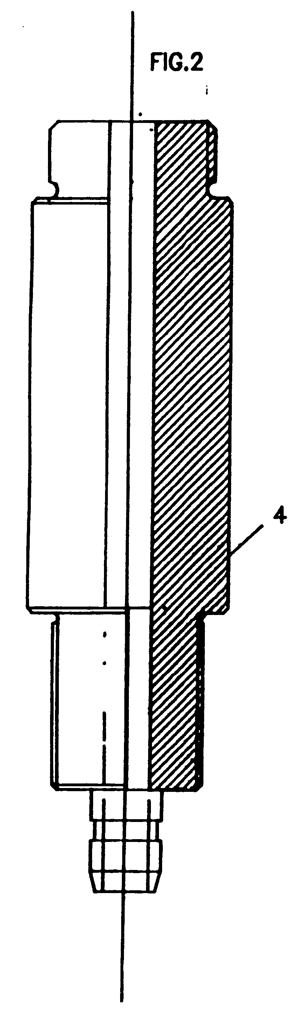

- Figur 2: das Zwischenstück aus Figur 1 im Teilschnitt und
- Figur 3: in Draufsicht eine innerhalb eines Tanks angeordnete Belüftereinrichtung mit mehreren Belüfterplatten.

In der horizontalen Bodenplatte 1 eines nur teilweise sichtbaren Flüssigkeitstanks 2 ist ein glattes Anschlußloch 3 vorgesehen. In diesem Anschlußloch 3 steckt ein Zwischenstück 4. Das Zwischenstück 4 ist rohrförmig und weist in seiner Längsmitte einen ringförmigen Vorsprung 5 auf, der außen als Sechskant ausgebildet sein kann, im Ausführungsbeispiel aber außen rund ist und zur Montage mit einer Rohrzange gefaßt werden kann. Beidseitig des Vorsprungs 5 sind zur Längsachse 7 senkrechte Schultern 8, 9 vorgesehen. Das eine Ende 10 des Zwischenstücks ist mit einem ersten Außengewinde 11 versehen. Dieses erste Außengewinde 11 paßt in das Innengewinde 12 einer Muffe 13, die in der Flächenmitte der Unterseite der Bodenplatte 14 einer allgemein mit 18 bezeichneten Belüfterplatte angeordnet ist.

Die Belüfterplatte 18 besteht aus zwei planparallel mit Abstand zueinander angeordneten, rechteckigen Platten - der Bodenplatte 14 und der Deckplatte 15 - und einem umlaufenden Rand 16, so daß ein quaderförmiger Kasten entsteht. Die Muffe 13 mündet in das Innere 17 der Belüfterplatte 18. In der Deckplatte 15 sind auf die ganze Fläche verteilt Belüfterdüsen, zum Beispiel die Belüfterdüsen 19, 20, 21 vorgesehen. Druckgas, das aus dem Zwischenstück 4 durch die Muffe 13 in das Innere 17 der Belüfterplatte 18 strömt, strömt dann aus diesen Belüfterdüsen nach oben zum Beispiel in die in den Tank 2 eingefüllte Flüssigkeit, die durch das Gas beispielsweise belüftet werden soll. Das Innere 17 der Belüfterplatte 18 ist zu diesem Zweck, abgesehen von dem Anschluß der Muffe 13 und den Belüfterdüsen druck- und gasdicht abgeschlossen.

Das andere Ende 25 des Zwischenstücks 4 weist ein zweites Außengewinde 26 auf, paßt mit Spiel durch das Anschlußloch 3 und ragt mit Überstand 27 aus der Bodenplatte 1 heraus. Zwischen der Schulter 9 und der Bodenplatte 1 liegt ein Dichtungsring 28 aus elastischem Material. Auf das Außengewinde 26 ist eine Mutter 29 mit äußerem Sechskant aufgeschraubt und festgezogen, so daß das Zwischenstück, abgedichtet durch den Dichtungsring 28, fest in der Bodenplatte 1 sitzt, die Bodenplatte 1 also zwischen der Schulter 9 und der Mutter 29 verspannt ist.

Das äußerste freie Ende des Zwischenstücks 4 ist als Schlauchnippel 30 ausgebildet. So ist es möglich, an den Schlauchnippel 30 einen Druckgasschlauch anzuschließen, durch den Druckgas durch den Kanal 31 des Zwischenstücks, durch den Kanal 32 der Muffe, durch einen Durchbruch 33 der Bodenplatte 14 in das Innere 17 der Belüfterplatte 18 und von da durch die Belüfterdüsen 19, 20, 21 ... in die im Tank 2 vorhandene Flüssigkeit strömt. Anstelle des Schlauchnippel 30 kann auch ein Gewindenippel vorgesehen sein.

Zur Montage der Belüfterplatte 18 wird zunächst das Zwischenstück 4 stramm in die Muffe 13 geschraubt, dann wird das Ende 25 des Zwischenstücks 4 unter Zwischenlage des Dichtungsrings 28 in das Anschlußloch 3 gesteckt und die Belüfterplatte in der Winkelorientierung zur Achse 7 gehalten, die sie endgültig im montierten Zustand einnehmen soll. Dann wird die Mutter 29 aufgeschraubt und festgezogen. Der Ausbau erfolgt entsprechend umgekehrt.

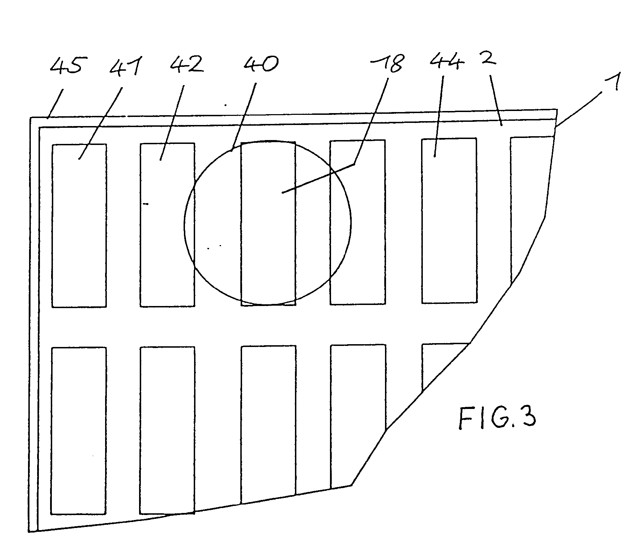

Bemerkenswert ist, daß weder beim Einbau noch beim Ausbau die Belüfterplatte 18 um ihre Achse 7 gedreht werden muß. Diese Belüfterplatten haben, da sie im allgemeinen einen langgestreckten, rechteckigen Querschnitt haben, beim Drehen um ihre Achse, wie beispielsweise für die Belüfterplatte 18 in Figur 3 durch den strichpunktierten Kreis 40 angedeutet, einen sehr großen Schwenkradius. Da nach der Erfindung bei der Montage und Demontage die Belüfterplatte nicht gedreht werden muß, ist eine sehr enge Anordnung der Belüfterplatten nebeneinander, wie es beispielsweise für die Belüfterplatten 41, 42, 18 und 44 in Figur 3 dargestellt ist, möglich. Diese Belüfterplatten sind auf gleicher Höhe so dicht nebeneinander an der gemeinsamen Bodenplatte 1 innerhalb des gemeinsamen Tanks 2 angeordnet, daß die Belüfterplatte 42 in den durch den strichpunktierten Kreis 40 dargestellten Schwenkbereich der benachbarten Belüfterplatte 18 ragt. Die Belüfterplatte 41 hätte angesichts ihrer dichten Anordnung neben der Wand 45 des Tanks 2 nicht so angeordnet werden können wie in Figur 3 dargestellt, wenn zur Montage Schwenkbewegungen der Belüfterplatte 41 um ihre Achse erforderlich wären.

Die in Figur 3 gezeichnete enge Anordnung wird erst durch die nach der Erfindung vorgesehene Anschlußvorrichtung möglich.

## Patentansprüche

1. Vorrichtung zum Anschluß einer flachen, mit einer in der Flächenmitte ihrer Unterseite angeordneten, mit Innengewinde (12) versehenen Muffe (13) ausgestatteten, innerhalb eines Tank (2) angeordneten Belüfterplatte (18) an der Bodenplatte (1) des Tank (2), dadurch gekennzeichnet,
daß ein rohrförmiges Zwischenstück ( 4 ) vorgesehen ist, das in der Längsmitte einen ringförmigen Vorsprung ( 5 ) und beidseitig zur Längsachse ( 7 ) senkrechte Schultern ( 8, 9 ) aufweist,
daß das eine Ende ( 10 ) des Zwischenstücks ein in das Innengewinde ( 12 ) der Muffe ( 13 ) passendes erstes Außengewinde ( 11 ) aufweist,
daß das andere Ende ( 25 ) des Zwischenstücks ein zweites Außengewinde ( 26 ) aufweist und durch ein in der Bodenplatte ( 1 ) vorgesehenes, glattes Anschlußloch ( 3 ) mit Überstand ( 27 ) paßt,
daß der Überstand eine Anschlußmuffe ( 30 ) aufweist und
daß eine Mutter ( 29 ) vorgesehen ist, die die Bodenplatte gegen den Vorsprung ( 5 ) verspannend auf den Überstand aufschraubbar ist.

2. Vorrichtung nach Anspruch 1, dadurch gekennzeichnet,
daß ein Dichtungsring ( 28 ) vorgesehen ist, der auf das andere Ende ( 25 ) des Zwischenstücks ( 4 ) gesteckt und zwischen dem Vorsprung ( 5 ) des Zwischenstücks und der Bodenplatte ( 1 ) angeordnet ist.

3. Vorrichtung nach Anspruch 1 oder 2, dadurch gekennzeichnet,
daß der Vorsprung ( 5 ) des Zwischenstücks ( 4 ) außen als Sechskant ausgebildet ist.

4. Vorrichtung nach einem der vorhergehenden Ansprüche, dadurch gekennzeichnet,
daß die Anschlußmuffe ( 30 ) als Schlauchnippel oder als Gewindenippel ausgebildet ist.

5. Belüftereinrichtung mit mehreren Belüfterplatten, die mit Vorrichtungen nach einem der vorhergehenden Ansprüche in einem gemeinsamen Tank aufgereiht angeordnet sind, dadurch gekennzeichnet,
daß eine Belüfterplatte ( 42 ) innerhalb des Schwenkbereichs einer benachbarten Belüfterplatte ( 18 ) angeordnet ist, wobei der Schwenkbereich ( 40 ) definiert ist durch den größten Kreis, den die betreffende Belüfterplatte beim Drehen um die Achse ( 7 ) ihrer Muffe beschreibt.

## Claims

1. Device for connecting a flat ventilator plate (18), which is equipped with a sleeve (13) and is disposed within a tank (2), the said sleeve being disposed in the areal centre of the bottom side of the said ventilator plate and provided with an internal thread (12), to the baseplate (1) of the tank (2), characterized
in that a tubular intermediate piece (4) is provided, which exhibits, in the longitudinal centre, an annular projection (5) and, on both sides, shoulders (8, 9) perpendicular to the longitudinal axis (7),
in that the one end (10) of the intermediate piece exhibits a first external thread (11) which fits into the internal thread (12) of the sleeve (13),
in that the other end (25) of the intermediate piece exhibits a second external thread (26) and fits with a projecting length (27) through a smooth connecting hole (3) provided in the baseplate (1),
in that the projecting length exhibits a connecting sleeve (30) and
in that a nut (29) is provided, which, bracing the baseplate against the projection (5), can be screwed onto the projecting length.

2. Device according to Claim 1, characterized in that a sealing ring (28) is provided, which is placed onto the other end (25) of the intermediate piece (4) and is disposed between the projection (5) of the intermediate piece and the baseplate (1).

3. Device according to Claim 1 or 2, characterized in that the projection (5) of the intermediate piece (4) is configured externally as a hexagon.

4. Device according to one of the preceding claims, characterized in that the connecting sleeve (30) is configured as a hose nipple or as a threaded nipple.

5. Ventilator system having a plurality of ventilator plates, which are disposed lined up in a common tank with devices according to one of the preceding claims, characterized in that a ventilator plate (42) is disposed within the range of swivel of an adjacent ventilator plate (18), the range of swivel (40) being defined by the largest circle which the ventilator plate in question describes when rotated about the axis (7) of its sleeve.

## Revendications

1. Dispositif pour raccorder à la plaque de fond (1) d'un réservoir (2) une plaque d'aération plate (18) qui est disposée à l'intérieur du réservoir (2) et qui est équipée d'un manchon (13) disposé au milieu de la surface de sa face inférieure et pourvu d'un filetage intérieur (12),
caractérisé par le fait qu'il est prévu une pièce intermédiaire tubulaire (4) qui comporte un bossage annulaire (5) en son milieu dans le sens longitudinal et, des deux côtés de celui-ci, des épaulements (8, 9) perpendiculaires à l'axe longitudinal (7),
par le fait que l'une des extrémités (10) de la pièce intermédiaire comporte un premier filetage extérieur (11) qui s'ajuste dans le filetage intérieur (12) du manchon (13),
par le fait que l'autre extrémité (25) de la pièce intermédiaire comporte un deuxième filetage extérieur (26), et qu'elle s'ajuste en présentant une partie en saillie (27) à travers un trou de raccordement lisse (3) prévu dans la plaque de fond (1),
par le fait que la partie en saillie comporte un manchon de raccordement (30) et :
par le fait qu'il est prévu un écrou (29) qui peut être vissé sur la partie en saillie en serrant la plaque de fond contre le bossage (5).

2. Dispositif selon la revendication 1, caractérisé par le fait qu'il est prévu une bague d'étanchéité (28) qui est enfoncée sur l'autre extrémité (25) de la pièce intermédiaire (4) et qui est disposée entre le bossage (5) de la pièce intermédiaire et la plaque de fond (1).

3. Dispositif selon la revendication 1 ou 2, caractérisé par le fait que le bossage (5) de la pièce intermédiaire (4) présente une surface extérieure à six pans.

4. Dispositif selon l'une des revendications précédentes, caractérisé par le fait que le manchon de raccordement (30) est réalisé sous la forme d'un embout pour tuyau ou d'un embout fileté.

5. Dispositif d'aération comprenant plusieurs plaques d'aération qui sont disposées en étant alignées dans un réservoir commun et qui comprennent des dispositifs selon l'une des revendications précédentes, caractérisé par le fait qu'une plaque d'aération (42) est disposée à l'intérieur de la zone de pivotement d'une plaque d'aération voisine (18), la zone de pivotement (40) étant définie par le plus grand cercle que la plaque d'aération concernée décrit lors de sa rotation autour de l'axe (7) de son manchon.
